# EUROPÄISCHE PATENTSCHRIFT

(11) **EP 0 563 641 B1**
(45) Veröffentlichungstag und Bekanntmachung des Hinweises auf die Patenterteilung: **20.09.1995**
(21) Anmeldenummer: 93103958.0
(22) Anmeldetag: 11.03.1993
(51) Int. Cl.: B65G 1/133

(54) **Hochregallager**
High-rise storage rack
Rayonnage d'emmagasinage surélevé

(30) Priorität: 31.03.1992 DE 4210592
(43) Veröffentlichungstag der Anmeldung: 06.10.1993
(73) Patentinhaber: Maschinenfabrik Alfred Schmermund GmbH & Co., D-58285 Gevelsberg (DE)
(72) Erfinder: Beckmann, Harald, W-5820 Gevelsberg (DE)
(74) Vertreter: Sparing Röhl Henseler Patentanwälte

(56) Entgegenhaltungen:
- EP-A- 0 022 441
- DE-A- 3 234 817
- PATENT ABSTRACTS OF JAPAN vol. 12, no. 141 (M-691)(2988) 28. April 1988 & JP-A-62 259 909 (KAO CORP.) 12. November 1987
- PATENT ABSTRACTS OF JAPAN vol. 10, no. 146 (M-482)(2203) 28. Mai 1986 & JP-A-61 002 602 (HITACHI SEISAKUSHO) 8. Januar 1986

## Beschreibung

Die Erfindung betrifft ein Hochregallager mit wenigstens einem Hochregal für stapelbare, vorzugsweise im wesentlichen zylindrische Produkte, insbesondere Bobinen aus Verpackungsmaterial, wobei das Hochregal eine Vielzahl von in Speicheretagen horizontal übereinander angeordneten Umlaufförderern für die Produkte und eine erste Übergabeeinrichtung für Produkte an die Speicheretagen umfaßt, sowie mit einer Förderbahn für eine Vielzahl von Stapeln von Produkten aufnehmende Produktträger.

Ein derartiges Hochregallager ist aus der DE-A-3 234 817 bekannt, bei dem vor einem Regal ein in einem Regalgang verfahrbares Regalförderzeug mit höhenverfahrbaren Lastträgern zur Übergabe von Produkte aufnehmenden Produktträgern in das Regal bzw. aus dem Regal heraus angeordnet ist. In den einzelnen Speicheretagen des Regals sind horizontal angeordnete Umlaufförderer vorgesehen, von deren vertikalen Umlenkachsen eine an den Übergabebereich des Regalförderzeuges angrenzt. Die Umlaufförderer nehmen die Produktträger, die mit Ketten des Umlaufförderers verbindbar sind, vom Regalförderzeug auf bzw. geben diese entsprechend dem Bedarf hieran wieder ab. Die Produktträger mit den Produkten werden auf einer Förderbahn angeliefert, eingelagert, entnommen und auf einer anderen Förderbahn wieder abgeführt. Bei einem derartigen Hochregal sind die Zugriffszeiten zu den Produkten relativ groß und die Durchsätze und die Verfügbarkeit der aufgenommenen Produkte relativ gering, da nur über das Regalförderzeug be- und entladen wird. Die Forderung nach möglichst kleinen Lägern mit hoher Umschlagfrequenz und minimierten Beständen ist hierdurch kaum erfüllbar. Für unterschiedliche Produkte mit unterschiedlichem Bedarf ist dieses Hochregallager zudem wenig geeignet.

Aufgabe der Erfindung ist es, ein Hochregallager der eingangs genannten Art zu schaffen, das möglichst kurze Zugriffszeiten und hohe Verfügbarkeit sowie möglichst geringen Bestand bezüglich der eingelagerten Produkte ermöglicht.

Diese Aufgabe wird dadurch gelöst, daß die erste Übergabeeinrichtung an einer Ladeseite und eine zweite Übergabeeinrichtung an einer der Ladeseite gegenüberliegenden Entladeseite des Hochregals angeordnet sind und wenigstens eine Verteilereinrichtung mit Aufnahmen für jeweils wenigstens ein Produkt im wesentlichen in einer bzw. mehreren Höhe(n) des mittleren Bereichs des Hochregals entsprechend ganzzahligen Vielfachen der Hochregalhöhe dividiert durch die um eins erhöhte Anzahl an Verteilereinrichtungen benachbart zur zweiten Übergabeeinrichtung verläuft.

Hierdurch wird erreicht, daß an einer Seite eines Hochregals Produkte eingeladen werden können, während gleichzeitig an der anderen Seite Produkte entnommen werden können, wobei zugleich der zur Entnahme zurückzulegende Weg einer Übergabeeinrichtung relativ klein ist, da eine oder mehrere das oder die entnommenen Produkte aufnehmende Verteilereinrichtung(en) im wesentlichen in einer bzw. mehreren Höhe(n) des mittleren Bereichs des Hochregals entsprechend ganzzahligen Vielfachen der Hochregalhöhe dividiert durch die um eins erhöhte Anzahl an Verteilereinrichtungen benachbart zur Übergabeeinrichtung angeordnet sind, d.h. bei einer Verteilereinrichtung ist diese etwa auf halber Hochregalhöhe angeordnet, bei zwei Verteilereinrichtungen sind diese etwa auf ein Drittel und zwei Drittel der Hochregalhöhe angeordnet etc. Hierdurch ist der Weg der Übergabeeinrichtung zwischen der jeweiligen Speicheretage und der entsprechenden Verteilereinrichtung entsprechend gering. Außerdem können so vorteilhafterweise die Produkte hierarchisch angeordnet werden, indem häufiger benötigte Produkte in Speicheretagen näher zu einer Verteilereinrichtung als weniger häufig benötigte Produkte gespeichert werden können.

Weitere Ausgestaltungen der Erfindung sind der nachfolgenden Beschreibung und den Unteransprüchen zu entnehmen.

Die Erfindung wird nachstehend anhand eines in den beigefügten Abbildungen dargestellten Ausführungsbeispiels näher erläutert.

Fig. 1 zeigt schematisiert perspektivisch und ausschnittweise ein Hochregallager.

Fig. 2 zeigt ausschnittweise einen Umlaufförderer von Fig. 1.

Fig. 3 zeigt einen Auflageteller des Umlaufförderers von Fig. 2 in Draufsicht.

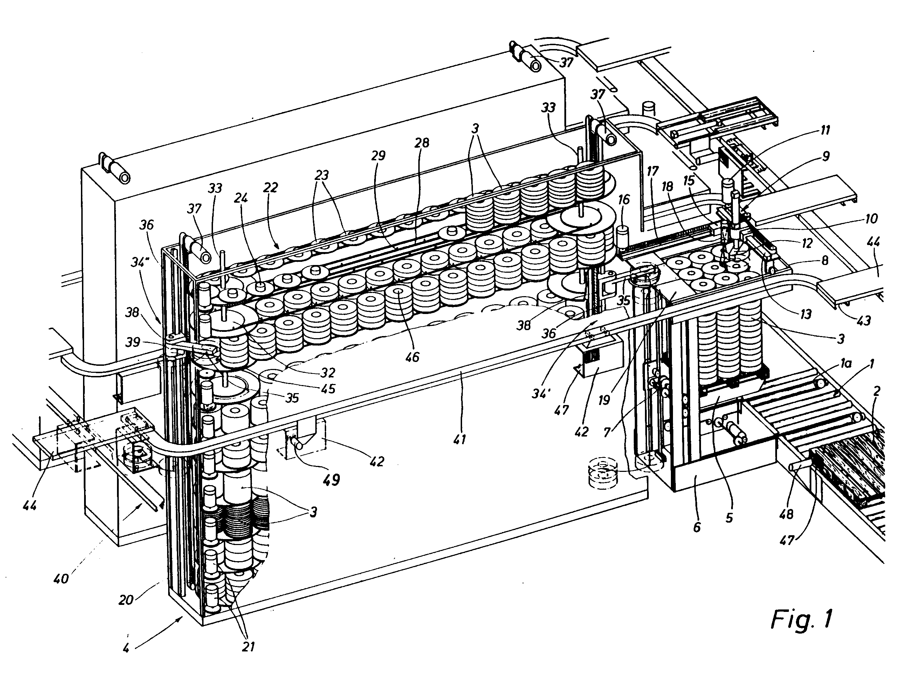

Das in Fig. 1 dargestellte Hochregallager wird über eine etwa durch einen Rollenförderer gebildete Förderbahn 1 mit auf als Paletten ausgebildeten Produktträgern 2 beliefert. Die zumindest im wesentlichen zylindrischen Produkte 3 sind mit vertikal angeordneten Achsen auf den Produktträgern 2 in mehreren Reihen neben-, hinter- und übereinander zu einem kompakten, etwa quaderförmigen Produktstapel gestapelt.

Das Hochregallager umfaßt mindestens ein, in der Regel mehrere, vom Grundriß her gesehen langgestreckte Hochregale 4, die ausgerichtet zueinander unter Belassung von Regalgängen zwischen den einzelnen Hochregalen 4 angeordnet sind. Die Förderbahn 1 führt an einer der beiden schmalen Stirnseiten der Hochregale 4 entlang.

Zu jedem Hochregal 4 gehört ein Hubtisch 5, der an der der Förderbahn 1 zugewandten Stirnseite des jeweiligen Hochregals 4 angeordnet ist. Der Hubtisch 5 ist innerhalb eines Rahmens 6 vertikal längs der Stirnseite des Hochregals 4 mittels eines Antriebs 7 verfahrbar. Die Übergabe eines mit Produkten 3 beladenen oder geleerten Produktträgers 2 von der Förderbahn 1 zum Hubtisch 5 bzw. vom Hubtisch 5 zur Förderbahn 1 erfolgt beispielsweise mittels antreibbarer Gurte 1a oder einer Schiebereinrichtung o.dgl.

Der Rahmen 6 erstreckt sich entsprechend dem dargestellten Ausführungsbeispiel bis etwa auf halbe Höhe des Hochregals 4 und ist auf dieser Höhe mit einem horizontalen, rechteckigen Rahmen 8 versehen. Der Rahmen 8 trägt eine Greifeinrichtung 9, die einen Schlitten 10 umfaßt, der einen über einen entsprechenden Antrieb 11 vertikal verfahrbaren Greifer 12 trägt und selbst längs einer horizontalen Schiene 13 zusammen mit dem Greifer 12 durch einen Antrieb 14 verfahrbar ist, wobei die Schiene 13 ihrerseits auf einem Schlitten 15 angeordnet ist, der seinerseits mittels eines Antriebs 16 längs einer zur Schiene 13 senkrecht angeordneten, horizontal am Rahmen 8 angeordneten Schiene 17 verfahrbar ist. Hierdurch kann der Greifer 12 in eine beliebige Position innerhalb des Bereichs des Rahmens 8 horizontal verfahren und ferner zum Ergreifen eines Produkts 3 an der Oberseite des auf einem auf dem Hubtisch 5 vorhandenen Produktträger 2 befindlichen Produktstapels abgesenkt werden.

Die richtige Position des Greifers 12 und das Ergreifen eines Produkts 3 durch den Greifer 12 kann über einen am Greifer 12 angeordneten Sensor 18, etwa eine Fernsehkamera, die die Position des Produktrandes in bezug auf den Greifer 12 erfaßt, überwacht werden. - Als Sensor 18 kommt auch ein mit einem Endschalter gekoppelter Fühler o.dgl. infrage. Stattdessen kann aber auch eine entsprechend genaue Steuerung der anzufahrenden Greiferpositionen zum Erfassen sämtlicher auf einem Produktträger 2 befindlichen Produkte 3 vorgesehen werden. - Wenn der Greifer 12 ein Produkt 3 erfaßt hat, wird er über seinen Antrieb 11 aufwärts und ferner in Richtung auf das Hochregal 4 in eine vorbestimmte Position (insbesondere eine Endposition) über einem benachbart zum Hochregal 4 am Rahmen 8 befindlichen Auflagetisch 19 verfahren, auf dem der Greifer 12 das Produkt 3 ablegt. Wenn der Greifer 12 die jeweils oberste Lage an auf dem Produktträger 2 auf dem Hubtisch 5 befindlichen Produkten 3 entnommen hat, wird der Hubtisch 5 um eine Produkthöhe hochgefahren, um die nächste Lage zu übergeben.

Das Hochregal 4 selbst umfaßt ein Gestell 20 mit einer Vielzahl von Speicheretagen, die jeweils einen von einem Antrieb 21 antreibbaren Umlaufförderer 22 aufweisen. Jeder Umlaufförderer 22 umfaßt eine Vielzahl von als Tragelemente dienenden, miteinander verbundenen Auflagetellern 23 jeweils für ein oder mehrere Produkte 3, die dann insbesondere koaxial übereinander gestapelt sind, wobei das jeweils unterste Produkt 3 auf dem Auflageteller 23, gegebenenfalls durch einen Zapfen 24 zentriert, insbesondere flach aufliegt, d.h. daß die Achsen der Produkte 3 koaxial und vertikal verlaufen.

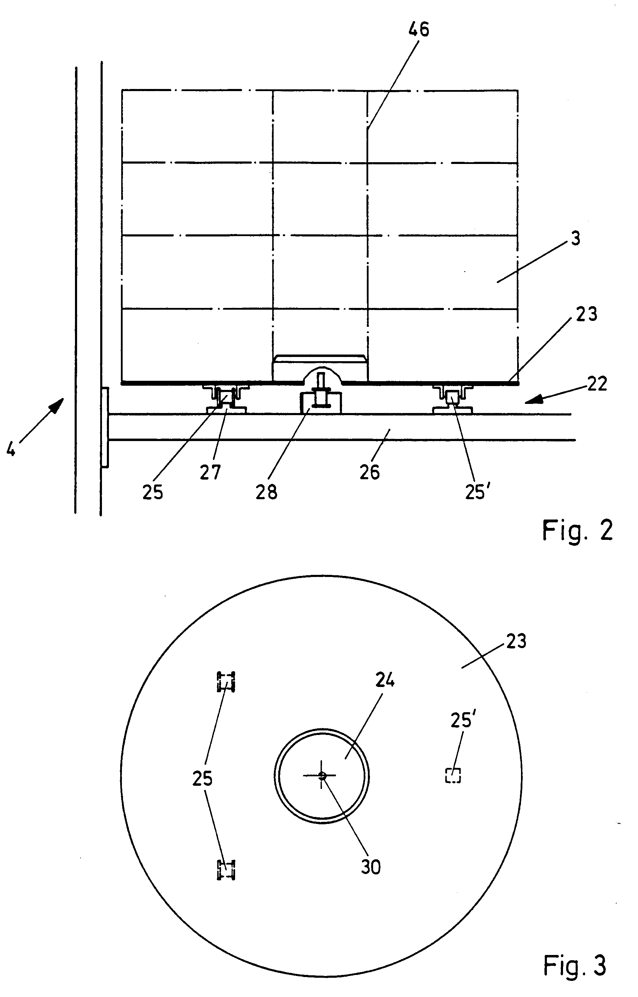

Wie aus Fig. 2 ersichtlich ist, können die Auflageteller 23 unterseitig Rollen 25, 25' tragen, die auf auf Zwischenböden 26 angeordneten Schienen 27 laufen, und über eine Kette 28, deren Glieder in vorbestimmten Abständen Mitnahmezapfen 29 tragen, die in Ausnehmungen 30 an den Unterseiten der Auflageteller 23 eingreifen, miteinander gekoppelt sein. Hierbei sind insbesondere pro Auflageteller 23 jeweils außenseitig zwei in Förderrichtung mit Abstand hintereinander angeordnete und als Führungsrollen ausgebildete Rollen 25 und innenseitig eine nur als Laufrolle ausgebildete Rolle 25' vorgesehen, vgl. Fig. 3. Die Kette 28 ist von einem Antrieb 21 antreibbar und wird von Umlenkrädern 32 an den beiden schmalen Stirnseiten des Hochregals 4 umgelenkt, wobei wenigstens ein Umlenkrad 32 antreibbar ist. Sämtliche Umlenkräder 32 können auf zwei entsprechenden vertikalen Achsen 33 angeordnet sein.

Die Auflageteller 23 können aber auch in einer Führungsnut über einen zentralen, gegebenenfalls mit einer Führungsrolle versehenen Zapfen geführt untereinander durch einen an dem jeweils vorangehenden oder nachfolgenden Zapfen angreifenden Arm als Plattenkette verkettet und über Umlenksterne umgelenkt und angetrieben sein. - Auch können die Auflageteller 23 über einen Flachgurt, einen Rundriemen o.dgl. verkettet sein. - Gegebenenfalls kann ein Auflageteller 23 jedes Umlaufförderers 22 zum Spielausgleich in seiner Ausdehnung in Förderrichtung veränderbar sein.

Jedes Hochregal 4 ist an seinen beiden Schmalseiten benachbart zu den Umlenkbereichen der Umlaufförderer 22 jeweils mit einer Übergabeeinrichtung 34', 34'' versehen, die unabhängig voneinander betätigbar sind. Jede Übergabeeinrichtung 34', 34'' umfaßt einen Greifer 35, der an einem längs einer vertikalen Schiene 36 mittels eines Antriebs 37 verfahrbaren Schlitten 38 mittels eines Antriebs 39 um eine vertikale Achse in einer horizontalen Ebene verschwenkbar ist.

Der Greifer 35 der Übergabeeinrichtung 34' benachbart zum Rahmen 6 für den Hubtisch 5 ergreift ein vom Greifer 12 auf dem Auflagetisch 19 abgelegtes Produkt 3 oder gegebenenfalls einen vom Greifer 12 auf dem Ablagetisch 19 gebildeten Produktstapel von axial ausgerichteten, übereinander angeordneten Produkten 3 und übergibt dieses bzw. diesen unter entsprechender vertikaler Verstellung längs der Schiene 36 und Verschwenkung gegenüber dem Schlitten 38 an einen freien Platz auf einem in Übernahmeposition befindlichen Aufnahmeteller 23 eines entsprechenden Umlaufförderers 22.

Der Greifer 35 der Übergabeeinrichtung 34'' auf der gegenüberliegenden Seite des Hochregals 4 ergreift ein Produkt 3 bzw. gegebenenfalls einen Produktstapel von einem benachbarten und damit in Entnahmeposition befindlichen Auflageteller 23 eines Umlaufförderers 22 und übergibt dieses bzw. diesen nach Schwenken gegenüber dem Schlitten 38 und eventuellem vertikalen Verfahren in eine Übergabeposition an eine Verteilereinrichtung 40.

Zur Übergabe von Produkten 3 vom Produktträger 2 an das Hochregal 4 können auch andere Einrichtungen als die vorstehend beschriebene verwendet werden, etwa korrespondierend zu derjenigen, die in der DE-A-3 234 817 beschrieben ist, die dann anstelle der Hubtischanordnung und der Übergabeeinrichtung 34' vor dem jeweiligen Hochregal 4 angeordnet ist.

Die Verteilereinrichtung 40 ist beim dargestellten Ausführungsbeispiel eine Einschienenhängebahn in Form eines Überkopfverteilers mit zumindest entlang den Übergabeeinrichtungen 34'' und zu entsprechenden Abgabestellen für die Produkte 3 geführten, im Profil etwa C-förmigen Schienen 41 für elektromotorisch antreibbare Transportwagen 42, die hängend von den Schienen 41 geführt und über längs der Schienen 41 geführte Stromanschlüsse 43 mit Strom versorgt werden. Die Schienen 41 sind beispeilsweise mit (nicht dargestellten) Zahnstangen innen versehen, mit denen ein elektromotorisch angetriebenes Ritzel des Transportwagens 42 in Eingriff steht. Insbesondere, wenn mehrere Hochregale 4 vorgesehen sind, sind auch entsprechende Weichen 44 zweckmäßig, um die Transportwagen 42, die ein oder mehrere Produkte 3 aufnehmen, in bezug auf den Materialfluß optimal einsetzen zu können. So verhindern Parallelweichen eine Staugefahr für nachfolgende Transportwagen 42. - Jedoch kann auch eine Verteilereinrichtung 40 verwendet werden, bei der Transportwagen 42 auf Schienen 41 nicht hängend, sondern aufgesetzt vorgesehen sind.

Damit der zur Entnahme zurückzulegende Weg einer Übergabeeinrichtung 34'' relativ klein ist, sind eine (wie dargestellt) oder mehrere das oder die entnommenen Produkte 3 aufnehmende Verteilereinrichtung(en) 40 im wesentlichen in einer bzw. mehreren Höhe(n) des mittleren Bereichs des Hochregals 4 entsprechend ganzzahligen Vielfachen der Hochregalhöhe dividiert durch die um eins erhöhte Anzahl an Verteilereinrichtungen 40 benachbart zur Übergabeeinrichtung 34'' angeordnet sind, d.h. bei einer Verteilereinrichtung 40 entsprechend dem dargestellten Ausführungsbeispiel ist diese etwa auf halber Hochregalhöhe angeordnet, bei zwei Verteilereinrichtungen 40 wären diese etwa auf ein Drittel und zwei Drittel der Hochregalhöhe angeordnet etc. Bei mehr als einer Verteilereinrichtung 40 kann es zweckmäßig sein, diese durch vertikale Weichen miteinander zu verknüpfen. Hierdurch ist der Weg der Übergabeeinrichtung 34'' zwischen der jeweiligen Speicheretage und der entsprechenden Verteilereinrichtung 40 entsprechend gering.

Die im wesentlichen um 180° zum Hochregal 4 versetzt angeordneten Übergabeeinrichtungen 34', 34'' können gleichzeitig arbeiten, so daß gleichzeitig Produkte in jedes Hochregal 4 eingeladen und ausgeladen werden können. Hierzu ist es zweckmäßig, wenn jede Speicheretage eine Aufnahmekapazität für Produkte 3 von zwei Produktträgern 2 aufweist, so daß, nachdem die Produkte 3 von einem Produktträger 2 in eine Speicheretage eingeladen sind, die Entnahme bereits beginnen kann, während mit dem Einladen der Produkte 3 eines weiteren Produktträgers in diese Speicheretage begonnen wird. Hierdurch ergibt sich eine besonders hohe Umschlagfrequenz mit entsprechend geringem Bestand.

Dadurch, daß beide Übergabeeinrichtungen 34', 34'' von der mittleren Höhe des Hochregals 4 aus als Ausgangsstellung arbeiten, um Produkte 3 an die jeweiligen Speicheretagen zu übergeben bzw. von diesen zu übernehmen, sind die zu diesem Zweck zurückzulegenden Wege relativ kurz und damit zeitsparend.

Jedoch kann es auch zweckmäßig sein, und zwar insbesondere bei sehr hohen Hochregalen 4 mit mehr als einer Verteilereinrichtung 40, den Hubtisch 5 mit dem Rahmen 8 derart versehen, daß ein voller Produktträger 2 zwischen dem Hubtisch 5 und dem Rahmen 8 einschiebbar ist, wobei dann der Auflagetisch 19 über den Hubtisch 5 in eine Höhe entsprechend der Höhe der jeweils zu füllenden Speicheretage gebracht wird, so daß der Greifer 35 der Greifeinrichtung 34' zum Beladen einer Speicheretage nur verschwenkt werden muß. Allerdings ist derartiges im Bodenbereich beim dargestellten Ausführungsbeispiel nicht möglich. Um dies auch dort zu ermöglichen, müßte der Hubtisch 5 zusätzlich um den Abstand zum Rahmen 8 absenkbar sein, anderenfalls ist die zusätzliche Vertikalbewegung des Greifers 35 zum Beladen der bodennahen Speicheretagen in kauf zu nehmen. Wenn dort entsprechend weniger benötigte Produkte 3 eingelagert werden, ist dies aber unproblematisch.

Als Greifer 12, 35 kommen solche infrage, die mit entsprechenden klemmenden Backen 45 die Produkte 3 außenumfänglich oder, wenn eine entsprechende axiale Öffnung 46 der Produkte 3 vorhanden ist, innen als Spreizbacken greifen. Wenn die Produkte 3 unterschiedliche axiale Höhen aufweisen, kann es zweckmäßig sein, die Greifer 12, 35 als Wendegreifer mit zwei unterschiedlichen Greiftiefen auszubilden.

Als Produkte 3 kommen insbesondere Bobinen aus Verpackungsmaterial infrage, die üblicherweise außenumfänglich zylindrisch und mit einem hohlen Bobinenkern versehen sind. Zur Zigarettenherstellung und -verpackung benötigt man eine Vielzahl von Bobinen aus unterschiedlichem Verpackungsmaterial und unterschiedlicher Breite, so etwa Bobinen für das Zigarettenpapier selbst, für das Innenpapier, gegebenenfalls das Außenpapier und eventuell für Zargen bei Klappdeckelpackungen, für die Einschlagfolie, den Aufreißstreifen, die Siegelmarken und weiter unterschiedliche Bobinen für die Stangenverpackung, wobei gegebenenfalls Markenwechsel bei den Zigaretten zu berücksichtigen sind, so daß dementsprechend Bobinen für unterschiedlich bedrucktes Außenpapier und den Stangeneinschlag vorzusehen sind. - Jedoch eignet sich das Hochregallager auch für andere Produkte 3, etwa zur Aufnahme und zum Verteilen von Bobinen aus Verpackungsmaterial für verschiedenste Gegenstände, etwa Schokolade o.dgl., oder zur Aufnahme und zum Verteilen von mit unterschiedlichen Dingen, wie Farben. Lebensmittel o.dgl. gefüllten, im wesentlichen zylindrischen Behältern wie Dosen, Eimern etc.

Die Produktträger 2 und die Transportwagen 42 sind mit Datenträgern 47 versehen, die Angaben über das aufgenommene Produkt 3 (z.B. Art und/oder Menge) beinhalten und von denen zumindest diejenigen der Transportwagen 42 umschreibbar sind (wenn die Produktträger 2 auch zum Abtransport von zum Beispiel verpackten Gebinden o.dgl. erneut im Rahmen einer Gesamtanlage verwendet werden sollen, ist jedenfalls ein umschreibbarer Datenträger 47 hierfür zweckmäßig). Die Datenträger 47 der Produktträger 2 werden im Bereich des Hubtisches 5 von einem Leser 48 gelesen, der die gelesenen Angaben an eine insbesondere Rechner gestützte Steuereinrichtung weiterleitet. Die Steuereinrichtung speichert die Ankunft der Art und Menge der mit dem Produktträger 2 angelieferten Produkte 3 und steuert deren Übergabe in bestimmte Speicheretagen des entsprechenden Hochregals 4. Bei entsprechendem Bedarf steuert die Steuereinrichtung die Abgabe der benötigten Menge an Produkte 3 aus den entsprechenden Speicheretagen an Transportwagen 42 der Verteilereinrichtung(en) 40, wobei deren Datenträger 47 entsprechend dem aktuellen Inhalt des Transportwagens 42 umgeschrieben und ferner der Inhalt der Speicheretage von der Steuereinrichtung festgehalten wird, um die Entleerung der Speicheretagen zu überwachen und gegebenenfalls neue Produkte 3 zum Nachfüllen anzufordern.

An den Schienen 41 sind ebenfalls Leser 49 angeordnet, die die Datenträger 47 von verbeikommenden Transportwagen 42 kontrollieren und damit über die Steuereinrichtung deren Weiterfahrt zu den gewünschten Zielorten steuern.

Die Steuereinrichtung kann insbesondere so programmiert sein, daß sie die Produkte 3 hierarchisch auf die Speicheretagen verteilt, d.h. diejenigen Produkte 3, die am meisten benötigt werden, in Speicheretagen benachbart zur Verteilereinrichtung 40, so daß die Übergabeeinrichtung 34 einen möglichst geringen Weg zur Übergabe dieser Produkte 3 von der Speicheretage zur Verteilereinrichtung 40 zurücklegen muß und damit zur Übergabe möglichst wenig Zeit benötigt. Beispeilsweise bei einer Zigarettenherstellungs- und -verpackungsanlage handelt es sich hierbei um die Bobinen für das Zigarettenpapier, die am häufigsten benötigt werden.

Die Steuereinrichtung kann gegebenenfalls so programmiert sein, daß sie selbst entsprechend der Häufigkeit von angeforderten Produkten 3 eine korrespondierende Hierarchie erstellen und die Produkte 3 nach dieser Hierarchie den Speicheretagen zuordnen kann.

## Patentansprüche

1. Hochregallager mit wenigstens einem Hochregal (4) für stapelbare, vorzugsweise im wesentlichen zylindrische Produkte (3), insbesondere Bobinen aus Verpackungsmaterial, wobei das Hochregal (4) eine Vielzahl von in Speicheretagen horizontal übereinander angeordneten Umlaufförderern (22) für die Produkte (3) und eine erste Übergabeeinrichtung (34') für Produkte (3) an die Speicheretagen umfaßt, sowie mit einer Förderbahn (1) für eine Vielzahl von Stapeln von Produkten (3) aufnehmende Produktträger (2), dadurch **gekennzeichnet,** daß die erste Übergabeeinrichtung (34') an einer Ladeseite und eine zweite Übergabeeinrichtung (34'') an einer der Ladeseite gegenüberliegenden Entladeseite des Hochregals (4) angeordnet sind und wenigstens eine Verteilereinrichtung (40) mit Aufnahmen (42) für jeweils wenigstens ein Produkt (3) im wesentlichen in einer bzw. mehreren Höhe(n) des mittleren Bereichs des Hochregals (4) entsprechend ganzzahligen Vielfachen der Hochregalhöhe dividiert durch die um eins erhöhte Anzahl an Verteilereinrichtungen (40) benachbart zur zweiten Übergabeeinrichtung (34'') verläuft.

2. Hochregallager nach Anspruch 1, dadurch gekennzeichnet, daß eine Verteilereinrichtung (40) etwa auf halber Hochregalhöhe angeordnet ist.

3. Hochregallager nach Anspruch 1 oder 2, dadurch gekennzeichnet, daß jede Speicheretage im wesentlichen eine Aufnahmekapazität für Produkte (3) von zwei Produktträgern (2) aufweist.

4. Hochregallager nach einem der Ansprüche 1 bis 3, dadurch gekennzeichnet, daß die Produkte (3) von den Produktträgern (2), einem zwischen der Förderbahn und der Ladeseite des Hochregals angeordneten Hubtisch (5), dem Umlaufförderer (22), den Übergabeeinrichtungen (34', 34'') mit vertikaler Achse und der Verteilereinrichtung (40) aufnehmbar sind.

5. Hochregallager nach einem der Ansprüche 1 bis 4, dadurch gekennzeichnet, daß die Umlaufförderer (22) miteinander in Verbindung stehende, geführte Tragelemente (23) zur Aufnahme von Produkten (3) aufweisen.

6. Hochregallager nach einem der Ansprüche 1 bis 5, dadurch gekennzeichnet, daß ein vertikal verfahrbarer Hubtisch (5) zum Transportieren der auf Produktträgern (2) angeordneten Produkte (3) auf eine Entnahmehöhe vorgesehen ist.

7. Hochregallager nach Anspruch 6, dadurch gekennzeichnet, daß im wesentlichen auf der Entnahmehöhe ein Auflagetisch (19) für vom Produktträger (2) entnommene Produkte benachbart zum Hochregal (4) angeordnet ist.

8. Hochregallager nach Anspruch 7, dadurch gekennzeichnet, daß ein auf der Entnahmehöhe arbeitender Greifer (12) zum Ergreifen eines auf dem Produktträger (2) befindlichen Produkts (3) und Ablegen hiervon auf dem Auflagetisch (19) vorgesehen ist.

9. Hochregallager nach Anspruch 8, dadurch gekennzeichnet, daß ein Rahmen (8) vorgesehen ist, der den hierzu verschiebbaren und bezüglich eines zu ergreifenden Produkts (3) positionierbaren Greifer (12) aufnimmt.

10. Hochregallager nach Anspruch 9, dadurch gekennzeichnet, daß der Rahmen (8) den Auflagetisch (19) trägt.

11. Hochregallager nach einem der Ansprüche 7 bis 10, dadurch gekennzeichnet, daß der Auflagetisch (19) etwa auf halber Höhe des Hochregals (4) angeordnet ist.

12. Hochregallager nach einem der Ansprüche 9 bis 11, dadurch gekennzeichnet, daß der Rahmen (8) vom Hubtisch (5) in einem Abstand entsprechend einem gefüllten Produkträger (2) getragen wird.

13. Hochregallager nach einem der Ansprüche 1 bis 12, dadurch gekennzeichnet, daß die Übergabeeinrichtungen (34', 34'') jeweils einen an einem vertikal verfahrbaren Schlitten (38) horizontal schwenkbar angeordneten Greifer (35) umfassen.

14. Hochregallager nach Anspruch 13, dadurch gekennzeichnet, daß der Greifer (12, 35) zangenartige Backen aufweist.

15. Hochregallager nach Anspruch 13, dadurch gekennzeichnet, daß der Greifer (12, 35) spreizbare Backen aufweist.

16. Hochregallager nach einem der Ansprüche 13 bis 15, dadurch gekennzeichnet, daß der Greifer (12, 35) ein Wendegreifer mit unterschiedlichen Backen an zwei gegenüberliegenden Seiten ist.

17. Hochregallager nach einem der Ansprüche 1 bis 16, dadurch gekennzeichnet, daß die Verteilereinrichtung (40) ein Überkopfverteiler mit elektromotorisch antreibbaren, in Schienen (41) geführten Transportwagen (42) als Aufnahmen ist, die gegebenenfalls Weichen (44) umfaßt.

18. Hochregallager nach Anspruch 17, dadurch gekennzeichnet, daß die Transportwagen (42) und die Produktträger (2) mit Datenträgern (47) und die Förderbahn (1) und die Verteilereinrichtung (40) mit Lesern (48, 49) für die Datenträger (47) versehen sind, die an eine Steuereinrichtung zum Steuern des Zuführens und Abführens von Produkten (3) zum bzw. vom Hochregal (4) angeschlossen sind.

19. Hochregallager nach Anspruch 18, dadurch gekennzeichnet, daß Produkten (3) mit dem größten Durchsatz durch die Steuereinrichtung Speicheretagen benachbart zu einer Verteilereinrichtung (40) zuweisbar sind.

20. Hochregallager nach Anspruch 18, dadurch gekennzeichnet, daß Produkten (3) nach abnehmendem Durchsatz geordnet durch die Steuereinrichtung Speicheretagen mit zunehmendem Abstand zu einer Verteilereinrichtung (40) zuweisbar sind.

## Claims

1. High-bay store having at least one high bay (4) for stackable, preferably essentially cylindrical products (3), in particular reels of packaging material, the high bay (4) comprising a multiplicity of circulating conveyors (22), which are arranged horizontally one above the other in storage shelves and are intended for the products (3), and a first transfer device (34') for transferring products (3) to the storage shelves, and having a conveying path (1) for product carriers (2) which receive a multiplicity of stacks of products (3), characterized in that the first transfer device (34') is arranged on a loading side of the high bay (4) and a second transfer device (34'') is arranged on an unloading side, located opposite the loading side, of the high bay (4), and at least one distributor device (40) with receiving means (42) for in each case at least one product (3) runs adjacent to the second transfer device (34'') essentially in one or more levels of the central region of the high bay (4) corresponding to whole-numbered multiples of the height of the high bay divided by the number, increased by one, of distributor devices (40).

2. High-bay store according to Claim 1, characterized in that a distributor device (40) is arranged approximately half way up the high bay.

3. High-bay store according to Claim 1 or 2, characterized in that each storage shelf essentially has a receiving capacity for products (3) of two product carriers (2).

4. High-bay store according to one of Claims 1 to 3, characterized in that the products (3) can be received by the product carriers (2), by a lifting table (5) which is arranged between the conveying path and the loading side of the high bay, by the circulating conveyor (22), by the transfer devices (34', 34'') with vertical axis, and by the distributor device (40).

5. High-bay store according to one of Claims 1 to 4, characterized in that the circulating conveyor (22) exhibit guided carrying elements (23) which are in connection with one another and are intended for receiving products (3).

6. High-bay store according to one of Claims 1 to 5, characterized in that provision is made for a vertically displaceable lifting table (5) for transporting the products (3), arranged on product carriers (2), to a removal level.

7. High-bay store according to Claim 6, characterized in that, essentially at the removal level, a supporting table (19) for products removed from the product carrier (2) is arranged adjacent to the high bay (4).

8. High-bay store according to Claim 7, characterized in that provision is made for a gripper (12) which operates at the removal level and is intended for seizing a product (3) located on the product carrier (2) and depositing said product on the supporting table (19).

9. High-bay store according to Claim 8, characterized in that provision is made for a frame (8) which receives the gripper (12) which can be displaced with respect to said frame and can be positioned with respect to a product (3) which is to be seized.

10. High-bay store according to Claim 9, characterized in that the frame (8) bears the supporting table (19).

11. High-bay store according to one of Claims 7 to 10, characterized in that the supporting table (19) is arranged approximately half way up the high bay (4).

12. High-bay store according to one of Claims 9 to 11, characterized in that the frame (8) is borne by the lifting table (5) at a distance corresponding to a filled product carrier (2).

13. High-bay store according to one of Claims 1 to 12, characterized in that the transfer devices (34', 34'') each comprise a gripper (35) which can be arranged in a horizontally pivotable manner on a vertically displaceable carriage (38).

14. High-bay store according to Claim 13, characterized in that the gripper (12, 35) exhibits tong-like jaws.

15. High-bay store according to Claim 13, characterized in that the gripper (12, 35) exhibits spreadable jaws.

16. High-bay store according to one of Claims 13 to 15, characterized in that the gripper (12, 35) is a turning gripper with different jaws on two of the said sides.

17. High-bay store according to one of Claims 1 to 16, characterized in that the distributor device (40) is an overhead distributor with transporting carriages (42) as receiving means, which can be driven by an electric motor and are guided in rails (41), the distributor device comprising, if appropriate, diverters (44).

18. High-bay store according to Claim 17, characterized in that the transporting carriages (42) and the product carriers (2) are provided with data carriers (47) and the conveying path (1) and the distributor device (40) are provided with readers (48, 49) for the data carriers (47), which are connected to a control device for controlling the feeding of products (3) to the high bay (4) and the removal of said products therefrom.

19. High-bay store according to Claim 18, characterized in that, by means of the control device, storage shelves adjacent to a distributor device (40) can be assigned to products (3) with the highest throughput.

20. High-bay store according to Claim 18, characterized in that, by means of the control device, storage shelves with an increasing distance from a distributor device (40) can be assigned to products (3) ordered in accordance with decreasing throughput.

## Revendications

1. Installation de stockage à rayonnage en hauteur comportant au moins un rayonnage en hauteur (4) pour des produits empilables (3), de préférence de forme sensiblement cylindrique, en particulier du type bobines de matériaux d'emballage, dans laquelle le rayonnage en hauteur (4) comporte une pluralité de convoyeurs sans fin (22) pour les produits (3), lesdits convoyeurs étant disposés horizontalement les uns au-dessus des autres dans des étages de rayonnage, et un premier dispositif de transfert (34') des produits (3) dans les étages de rayonnage, ladite installation comportant également une ligne de convoyage (1) pour une pluralité de palettes (2) portant des empilements de produits (3), caractérisée en ce que le premier dispositif de transfert (34') est agencé au niveau d'une face de chargement dudit rayonnage (4) et un second dispositif de transfert (34'') est agencé au niveau d'une face de déchargement dudit rayonnage (4) prévue à l'opposé de la face de chargement, et en ce qu'au moins un dispositif-répartiteur (40) comportant des moyens de réception (42) pour au moins un produit (3) s'étend au voisinage du second dispositif de transfert (34''), sensiblement à une hauteur correspondant à un multiple entier du quotient de la hauteur du rayonnage (4) par le nombre, majoré d'une unité, de dispositifs-répartiteurs (40).

2. Installation de stockage à rayonnage en hauteur selon la revendication 1, caractérisée en ce qu'un dispositifrépartiteur (40) est agencé environ à mi-hauteur du rayonnage.

3. Installation de stockage à rayonnage en hauteur selon la revendication 1 ou 2, caractérisée en ce que chaque étage de rayonnage présente une capacité de stockage sensiblement égale à la quantité de produits (3) trouvant place sur deux palettes (2).

4. Installation de stockage à rayonnage en hauteur selon l'une des revendications 1 à 3, caractérisée en ce que les produits (3) sont susceptibles d'être saisis à partir des palettes (2), à partir d'une table élévatrice (5) agencée entre la ligne de convoyage et la face de chargement du rayonnage, à partir du convoyeur sans fin (22), à partir des dispositifs de transfert (34',34'') à axes verticaux et à partir du dispositif-répartiteur (40).

5. Installation de stockage à rayonnage en hauteur selon l'une des revendications 1 à 4, caractérisée en ce que les convoyeurs sans fin (22) comportent des plateaux-support (23) de réception des produits (3), reliés entre eux et déplacés ensemble.

6. Installation de stockage à rayonnage en hauteur selon l'une des revendications 1 à 5, caractérisée en ce qu'il est prévu une table élévatrice mobile verticalement (5) destinée à transporter à une hauteur d'enlèvement les produits (3) empilés sur les palettes (2).

7. Installation de stockage à rayonnage en hauteur selon la revendication 6, caractérisée en ce qu'une table de transbordement (19) pour les produits (3) enlevés de la palette (2) est agencée, au voisinage du rayonnage (4), sensiblement à la hauteur d'enlèvement.

8. Installation de stockage à rayonnage en hauteur selon la revendication 7, caractérisée en ce qu'il est prévu un moyen de saisie (12) travaillant à la hauteur d'enlèvement, ledit moyen de saisie étant destiné à saisir un produit (3) se trouvant sur la palette (2) et à décharger ledit produit sur la table de transbordement (19).

9. Installation de stockage à rayonnage en hauteur selon la revendication 8, caractérisée en ce qu'il est prévu un châssis (8) portant le moyen de saisie (12), ce dernier étant monté de manière mobile sur le châssis et de manière positionnable par rapport à un produit (3) à saisir.

10. Installation de stockage à rayonnage en hauteur selon la revendication 9, caractérisée en ce que le châssis (8) porte la table de transbordement (19).

11. Installation de stockage à rayonnage en hauteur selon l'une des revendications 7 à 10 , caractérisée en ce que la table de transbordement (19) est agencée environ à mihauteur du rayonnage (4).

12. Installation de stockage à rayonnage en hauteur selon l'une des revendications 9 à 11, caractérisée en ce que le châssis (8) est agencé à une distance de la table élévatrice (5) correspondant à la hauteur d'une palette (2) pleine.

13. Installation de stockage à rayonnage en hauteur selon l'une des revendications 1 à 12, caractérisée en ce que les dispositifs de transfert (34', 34'') comportent chacun un moyen de saisie (35) agencé de manière pivotante horizontalement sur un chariot (38) mobile verticalement.

14. Installation de stockage à rayonnage en hauteur selon la revendication 13, caractérisée en ce que le moyen de saisie (12, 35) présente des mâchoires en forme de pinces.

15. Installation de stockage à rayonnage en hauteur selon la revendication 13, caractérisée en ce que le moyen de saisie (12, 35) présente des mâchoires susceptibles de s'écarter.

16. Installation de stockage à rayonnage en hauteur selon l'une des revendications 13 à 15, caractérisée en ce que le moyen de saisie (12, 35) est un moyen de saisie tournant comportant des mâchoires différentes sur deux faces opposées.

17. Installation de stockage à rayonnage en hauteur selon l'une des revendications 1 à 16, caractérisée en ce que le dispositif-répartiteur (40) est un répartiteur agencé au-dessus de la hauteur de tête et comportant comme moyens de réception des moyens de transport (42) actionnés par moteur électrique et portés par des rails (41), ledit répartiteur comportant éventuellement des aiguillages (44).

18. Installation de stockage à rayonnage en hauteur selon la revendication 17, caractérisée en ce que les moyens de transport (42) et les palettes (2) sont munis de supports d'informations (47) et en ce que la ligne de convoyage (1) et le dispositif-répartiteur (40) sont munis de lecteurs (48, 49) desdits supports d'informations (47), lesdits lecteurs étant connectés à un dispositif de commande pour le pilotage des arrivées de produits (3) au rayonnage (4) et des sorties de produits (3) du rayonnage (4).

19. Installation de stockage à rayonnage en hauteur selon la revendication 18, caractérisée en ce que les produits (3) présentant la plus grande vitesse de rotation sont affectés par le dispositif de commande aux étages de rayonnages qui sont au voisinage d'un dispositif répartiteur (40).

20. Installation de stockage à rayonnage en hauteur selon la revendication 19, caractérisée en ce que le dispositif de commande affecte les produits (3), en fonction de leur vitesse de rotation, à des étages de rayonnage plus ou moins distants d'un dispositif répartiteur (40).
